# EUROPÄISCHE PATENTANMELDUNG

(11) **EP 1 211 780 A1**
(43) Veröffentlichungstag der Anmeldung: **05.06.2002**
(21) Anmeldenummer: 01127885.0
(22) Anmeldetag: 23.11.2001
(51) Int. Cl.: H02K 3/24

(54) **Rotor für eine elektrische rotierende Maschine**

(30) Priorität: 30.11.2000 DE 10059387
(71) Anmelder: ALSTOM Power N.V., 1101 CS Amsterdam (NL)
(72) Erfinder: Baer, Jürgen, 5506 Mägenwil (CH); Bremer, Joachim, 8055 Zürich (CH); Mesters, Wolfgang, 8037 Zürich (CH); Müller, Ulf Christian, Dr., 5416 Kirchdorf (CH)
(74) Vertreter: Liebe, Rainer

(57) **Zusammenfassung**

Die Erfindung betrifft einen Rotor (1) für eine elektrische rotierende Maschine, z.B. Turbogenerator. Der Rotor (1) besitzt eine Rotorwicklung (7), die mehrere, in Umfangsrichtung nebeneinander angeordnete Sektoren aufweist. In jedem Sektor sind mehrere Leiterstäbe (4) in radialer Richtung aufeinander geschichtet. Die Leiterstäbe (4) erstrecken sich parallel zur Rotorlängsachse (3). Jeder der Sektoren weist einen axialen Lüftungskanal (5) und mehrere damit kommunizierende radiale Lüftungsöffnung (6) auf. Der Lüftungskanal (5) ist bezüglich der Leiterstäbe (4) radial innen angeordnet und erstreckt sich parallel zur Rotorlängsachse (3). Die Lüftungsöffnungen (6) sind in axialer Richtung voneinander beabstandet und erstrecken sich radial durch die Leiterstäbe (4) hindurch.
Zur Verbesserung der Herstellung des Rotors (1) sind die Lüftungsöffnungen (6) in den Leiterstäben (4) durch kreiszylindrische Bohrungen gebildet, die bei den aufeinander geschichteten Leiterstäben (4) eines Sektors zueinander radial fluchtend angeordnet sind.

## Beschreibung

### Technisches Gebiet

Die Erfindung betrifft einen Rotor für eine elektrische rotierende Maschine, z.B. für einen Turbogenerator, mit den Merkmalen des Oberbegriffs des Anspruchs 1. Die Erfindung betrifft ausserdem ein Verfahren zur Herstellung eines derartigen Rotors sowie eine Vorrichtung zur Durchführung dieses Verfahrens als auch die Verwendung einer solchen Vorrichtung zur Durchführung des Verfahrens.

### Stand der Technik

In der JP-A 0 900 95 42 (Abstract) wird ein derartiger Rotor gezeigt, der mit einer Rotorwicklung ausgestattet ist, die mehrere, in Umfangsrichtung nebeneinander angeordnete Sektoren aufweist, in denen jeweils mehrere Leiterstäbe in radialer Richtung aufeinander geschichtet sind. Dabei weist jeder dieser Sektoren einen axialen Lüftungskanal und mehrere damit kommunizierende radiale Lüftungsöffnungen auf. Dieser Lüftungskanal ist am Rotor bezüglich der Leiterstäbe radial innen angeordnet und erstreckt sich parallel zur Rotorlängsachse. Die Lüftungsöffnungen sind in axialer Richtung voneinander beabstandet und erstrecken sich radial durch die Leiterstäbe hindurch. Die Lüftungsöffnungen sind hierbei als Schlitze oder Langlöcher ausgebildet und erstrecken sich in axialer Richtung.

Ein derartiger Lüftungskanal dient zusammen mit den damit verbundenen Lüftungsöffnungen zur Realisierung einer Kühlung des Rotors bzw. der Rotorwicklung, bei der Lüftungskanal und Lüftungsöffnung mit Kühlluft durchströmt werden, welche axial aussen in den Lüftungskanal eingebracht wird. Um die Kühlungswirkung zu verbessern, wird beim bekannten Rotor vorgeschlagen, die axiale Länge der Schlitze bzw. der Langlöcher, aus denen die Lüftungsöffnungen gebildet sind, in einem axial innen liegenden Bereich des Rotors grösser auszubilden als in den axial aussen liegenden Abschnitten.

Ein Rotor der eingangs genannten Art ist auch aus der JP-A 0 831 75 80 (Abstract) bekannt. Beim dort gezeigten Rotor sind die Luftöffnungen ebenfalls durch Schlitze oder Langlöcher gebildet, die sich in axialer Richtung erstrecken. Um bei diesem Rotor die Kühlung des Rotors bzw. der Rotorwicklung zu verbessern, wird für eine erste Alternative vorgeschlagen, die axiale Länge der Schlitze bzw. Langlöcher in einen axial innen liegenden Bereich des Rotors kleiner zu wählen als in den axial aussen liegenden Abschnitten. Für eine zweite Alternative wird vorgeschlagen, die axiale Länge der Schlitze oder Langlöcher konstant zu halten und statt dessen die axialen Abstände zwischen benachbarten Schlitzen oder Langlöchern in einem axial innen liegenden Bereich des Rotors grösser auszubilden als in den axial aussen liegenden Abschnitten.

Die Herstellung der bekannten Rotoren ist sehr kostspielig, da die Einbringung der Langlöcher bzw. Schlitze in die einzelnen Leiterstäbe einen hohen apparativen und zeitlichen Aufwand erfordert. Darüber hinaus besteht auch bei den bekannten Rotoren weiterhin das Bedürfnis, die Kühlwirkung für den Rotor bzw. für die Rotorwicklung zu verbessern.

### Darstellung der Erfindung

Die vorliegende Erfindung beschäftigt sich mit dem Problem, für einen Rotor der eingangs genannten Art Möglichkeiten aufzuzeigen, die eine relativ preiswerte Herstellung des Rotors ermöglichen. Darüber hinaus soll die Kühlung des Rotors bzw. der Rotorwicklung verbessert werden.

Dieses Problem wird erfindungsgemäss durch einen Rotor mit den Merkmalen des Anspruchs 1 gelöst.

Die Erfindung beruht auf dem allgemeinen Gedanken, die radial verlaufenden Lüftungsöffnungen in den Leiterstäben durch kreiszylindrische Bohrungen auszubilden. Diese Massnahme gewährleistet einerseits eine preiswerte Herstellbarkeit des Rotors, da kreiszylindrische Bohrungen besonders einfach und besonders schnell in die Leiterstäbe eingebracht werden können. Das Einbringen solcher Bohrungen eignet sich auch besonders gut für ein automatisch ablaufendes Fertigungsverfahren. Anderseits kann durch die Anbringung von kreiszylindrischen Bohrungen anstelle von Schlitzen oder Langlöchern die Kühlwirkung für den Rotor bzw. die Rotorwicklung verbessert werden, da mehrere axial nebeneinander angeordnete kreiszylindrische Bohrungen eine grössere Oberfläche aufweisen können als ein entsprechendes Langloch. Dies hat zur Folge, dass durch mehrere Bohrungen, die entlang eines Axialabschnittes mit der axialen Länge X angeordnet sind, eine bessere Wärmeübertragung zwischen der Kühlluft und den zu kühlenden Leitern erzielbar ist als bei einem Langloch mit der axialen Länge X.

Eine besonders einfache Herstellung der Lüftungsöffnungen ergibt sich dann, wenn alle Bohrungen bei allen Lüftungsöffnungen in allen mit Lüftungsöffnungen versehenen Sektoren den selben Durchmesser aufweisen. Durch diese Vereinheitlichung ist es daher grundsätzlich möglich, mit nur einem einzigen Werkzeug sämtliche Bohrungen herzustellen.

Die Kühlungswirkung für den Rotor bzw. die Rotorwicklung kann bei einer besonderen Ausführungsform dadurch verstärkt werden, dass die Lüftungsöffnungen so angeordnet sind, dass die axialen Abstände benachbarter Lüftungsöffnungen von axial aussen nach axial innen zunehmen. Diese Ausführungsform nutzt dabei die Erkenntnis, dass ein aerodynamischer Umlenkwiderstand überwunden werden muss, um die im Lüftungskanal axial verlaufende Strömung radial in die Lüftungsöffnungen umzulenken, in denen die Strömung radial verläuft. Dabei ist dieser Umlenkwiderstand axial aussen grösser als axial innen, da bei den axial weiter aussen liegenden Lüftungsöffnungen die axiale Kühlluftströmung eine relativ hohe Strömungsgeschwindigkeit besitzt. Bei den axial weiter innen liegenden Lüftungsöffnungen ist die Strömungsgeschwindigkeit der Kühlluftströmung durch die vorher erfolgten Abströmungen reduziert, so dass der zu überwindende Umlenkwiderstand dort geringer ist.

Das der Erfindung zugrunde liegende Problem wird auch durch ein Verfahren mit den Merkmalen des Anspruchs 3 gelöst. Im Unterschied zu einem herkömmlichen Verfahren, bei dem Langlöcher oder Schlitze gefrässt werden müssen, kann das erfindungsgemässe Verfahren erheblich schneller durchgeführt werden, da lediglich kreiszylindrische Bohrungen in die Leiterstäbe eingebracht werden müssen. Da das erfindungsgemässe Verfahren schneller abläuft als ein herkömmliches, können damit die Herstellungskosten für die Leiterstäbe und somit für den Rotor gesenkt werden.

Das der Erfindung zugrunde liegende Problem wird auch durch eine Vorrichtung mit den Merkmalen des Anspruchs 4 gelöst. Hierbei wird vorgeschlagen, die kreiszylindrischen Bohrungen mittels einer entsprechenden Bohreinrichtung automatisch an den für die Lüftungsöffnungen vorgesehenen Stellen auszubilden. Da die erfindungsgemässe Vorrichtung mit einer Bohreinrichtung arbeitet, die erfindungsgemäss kreiszylindrische Bohrungen erzeugt, kann sie schneller arbeiten als eine Vorrichtung zur Erzeugung schlitzförmiger Öffnungen, die beispielsweise mit einer Frässeinrichtung oder mit einer kombinierten Bohr- und Frässeinrichtung arbeitet. Dementsprechend ermöglicht die erfindungsgemässe Vorrichtung eine Reduzierung der Herstellungskosten für die Leiterstäbe und somit für den Rotor.

Schliesslich wird das der Erfindung zugrunde liegende Problem auch dadurch gelöst, dass eine Vorrichtung gemäss Anspruch 4 zur Durchführung eines Verfahrens nach Anspruch 3 verwendet wird. Die vorgeschlagene Verwendung gewährleistet ebenfalls kürzere Herstellungszeiten für die Leiterstäbe und somit reduzierte Herstellungskosten für die Leiterstäbe und folglich auch für den Rotor.

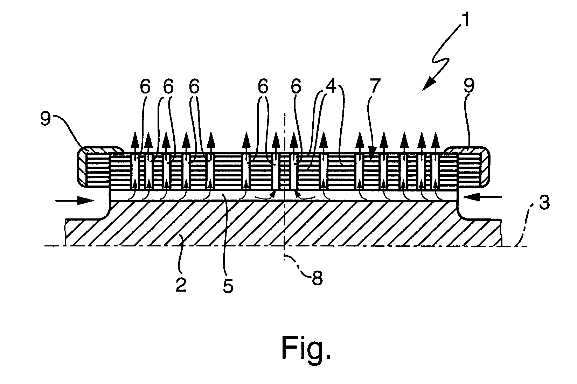

Weitere wichtige Merkmale und Vorteile der Erfindung ergeben sich aus den Unteransprüchen, aus der Zeichnung und aus der zugehörigen Figurenbeschreibung anhand der Zeichnung.

### Kurze Beschreibung der Zeichnung

Ein bevorzugtes Ausführungsbeispiel der Erfindung ist in der Zeichnung dargestellt und wird in der nachfolgenden Beschreibung näher erläutert. Die einzige Figur zeigt einen Axialschnitt durch die Hälfte eines Rotors nach der Erfindung.

### Wege zur Ausführung der Erfindung

Entsprechend der Figur besitzt ein Rotor 1 einen zentralen Rotorkörper oder Rotorballen 2, der um seine Längsachse 3 rotiert, wenn der Rotor 1 in eine entsprechende elektrische rotierende Maschine eingebaut ist, die beispielsweise einen Turbogenerator bildet.

An seinem Rotorkörper 2 weist der Rotor 1 eine Rotorwicklung 7 auf. Entlang seines Umfanges ist der Rotor 1 bzw. seine Rotorwicklung 7 in mehrere Sektoren aufgeteilt, die in Umfangsrichtung nebeneinander angeordnet sind. Der in der Figur wiedergegebene Längsschnitt ist durch einen dieser Sektoren gelegt. In jedem dieser Sektoren sind mehrere Leiterstäbe 4 in radialer Richtung aufeinander geschichtet. Diese Leiterstäbe 4, die beispielsweise durch Kupferstäbe gebildet sein können, erstrecken sich parallel zur Rotorlängsachse 3 und sind in herkömmlicher Weise gegeneinander elektrisch isoliert.

In jedem Sektor besitzt der Rotor 1 einen Lüftungskanal 5, der sich in axialer Richtung des Rotorballens 2 erstreckt. Dieser Lüftungskanal 5 ist bezüglich der Leiterstäbe 4 radial innen am Rotorballen 2 angeordnet. Mit diesem Lüftungskanal 5 kommunizieren mehrere radiale Lüftungsöffnungen 6, die sich in radialer Richtung durch die Leiterstäbe 4 hindurch erstrecken. Beim Betrieb des Rotors 1 in einer elektrischen rotierenden Maschine dienen diese Luftöffnungen 6 zur Kühlung der Leiterstäbe 4 und somit der Rotorwicklung 7 und letztlich des Rotors 1. Zu diesem Zweck wird der Lüftungskanal 5 an beiden axialen Enden mit Kühlluft beaufschlagt, die sich dann auf die einzelnen Lüftungsöffnungen 6 verteilt, die Leiterstäbe 4 durchströmt und anschliessend aus der Rotorwicklung 7 austritt.

Erfindungsgemäss sind sämtliche Lüftungsöffnungen 6 durch kreiszylindrische Bohrungen gebildet, die in den einzelnen Leiterstäben 4 ausgebildet sind. Durch die gewählte Positionierung dieser Bohrungen entlang der Leiterstäbe 4 können sich beim zusammengebauten Rotor 1 die Lüftungsöffnungen 6 dadurch ausbilden, dass die Bohrungen der aufeinander geschichteten Leiterstäbe 4 zueinander radial fluchtend angeordnet sind.

Bei der in der Figur dargestellten bevorzugten Ausführungsform nehmen die axialen Abstände zwischen benachbarten Lüftungsöffnungen 6 ausgehend von einer mit 8 bezeichneten Rotormitte, in deren unmittelbaren Nähe die ersten beiden Lüftungsöffnungen liegen, axial nach aussen ab. Auf diese Weise ergibt sich insgesamt eine relativ homogene Verteilung der Kühlluftströmung entlang der axialen Länge des Rotors1. Dies hat eine Verbesserung der Kühlwirkung des Rotors 1 bzw. der Rotorwicklung 7 zur Folge. Durch diese Massnahme kann die Lebensdauer sowie die elektrisch erzeugte Leistung des Rotors 1 erheblich gesteigert werden.

In der Figur ist ausserdem an den axialen Enden des Rotorkörpers 2 jeweils eine Induktorkappe 9 dargestellt. Es ist klar, dass der Rotor 1 radial aussen in üblicher Weise einen Keil aufweisen kann, der zum Festlegen der Leiterstäbe 4 am Rotorkörper 2 dient. Radial zwischen diesem Keil kann dann in entsprechender Weise auch eine geeignete Isolierung angeordnet sein.

Zur Kühlung des Rotors 1 bzw. zur Kühlung der Rotorwicklung 7 erhalten alle Sektoren des Rotors 1 bzw. der Rotorwicklung 7 einen derartigen Kühlkanal 5 bzw. derartige Kühlungsöffnungen 6.

Die Herstellung des Rotors 1 vereinfacht sich in besonderer Weise, wenn für die Ausbildung der Lüftungsöffnungen 6 sämtliche in den Leiterstäben 4 anzubringenden Bohrungen den selben Durchmesser aufweisen.

### Bezugszeichenliste

- 1: Rotor
- 2: Rotorkörper/-ballen
- 3: Längsachse/Rotationsachse
- 4: Leiterstab
- 5: Lüftungskanal
- 6: Lüftungsöffnung
- 7: Rotorwicklung
- 8: Rotormitte
- 9: Induktorkappe

## Patentansprüche

1. Rotor für eine elektrische rotierende Maschine, z.B. Turbogenerator, mit einer Rotorwicklung (7), die mehrere, in Umfangsrichtung nebeneinander angeordnete Sektoren aufweist, in denen jeweils mehrere Leiterstäbe (4) in radialer Richtung aufeinander geschichtet sind, die sich parallel zur Rotorlängsachse (3) erstrecken, wobei jeder der Sektoren einen axialen Lüftungskanal (5) und mehrere damit kommunizierende radiale Lüftungsöffnungen (6) aufweist, wobei der Lüftungskanal (5) bezüglich der Leiterstäbe (4) radial innen angeordnet ist und sich parallel zur Rotorlängsachse (3) erstreckt und wobei die Lüftungsöffnungen (6) in axialer Richtung voneinander beabstandet sind und sich radial durch die Leiterstäbe (4) hindurch erstrecken, **dadurch gekennzeichnet, dass** alle Lüftungsöffnungen (6) in den Leiterstäben (4) durch kreiszylindrische Bohrungen mit dem selben Durchmesser gebildet sind, die bei den aufeinander geschichteten Leiterstäben (4) in allen mit Luftöffnungen versehenen Sektoren zueinander radial fluchtend angeordnet sind.

2. Rotor nach Anspruch 1, **dadurch gekennzeichnet, dass** die Lüftungsöffnungen (6) so angeordnet sind, dass die axialen Abstände benachbarter Lüftungsöffnungen (6) entlang des Rotors (1) von axial aussen nach axial innen zunehmen.

3. Verfahren zur Herstellung eines Rotors (1) nach Anspruch 1 oder 2, **dadurch gekennzeichnet, dass** zur Ausbildung der Lüftungsöffnungen (6) in die entsprechenden Leiterstäbe (4) kreiszylindrische Bohrungen eingebracht werden, die derart angeordnet sind, dass die Bohrungen bei aufeinander geschichteten Leiterstäben (4) radial fluchten und die Lüftungsöffnungen (6) ausbilden.

4. Vorrichtung zur Durchführung des Verfahrens nach Anspruch 3, **dadurch gekennzeichnet, dass** eine Halteeinrichtung vorgesehen ist, die den zu bearbeitenden Leiterstab (4) fixiert, und dass eine Bohreinrichtung vorgesehen ist, die automatisch an den für die Lüftungsöffnungen (6) vorgesehenen Stellen kreiszylindrische Bohrungen erzeugt.

5. Verwendung einer Vorrichtung nach Anspruch 4 zur Durchführung eines Verfahrens nach Anspruch 3.
